# EUROPÄISCHE PATENTANMELDUNG

(11) **EP 2 111 947 A2**
(43) Veröffentlichungstag der Anmeldung: **28.10.2009**
(21) Anmeldenummer: 09003875.3
(22) Anmeldetag: 18.03.2009
(51) Int. Cl.: B23Q 17/20, B23Q 17/24

(54) **Bearbeitungsmaschine für Tür- beziehungsweise Fensterrahmenprofile**

(30) Priorität: 31.03.2008 DE 102008016736
(71) Anmelder: Urban GmbH & Co. Maschinenbau KG, D-87700 Memmingen (DE)
(72) Erfinder:
(74) Vertreter: Schulz, Manfred

(57) **Zusammenfassung**

Die Erfindung betrifft eine Bearbeitungsmaschine für Tür- beziehungsweise Fensterrahmenprofile. Diese weist eine Bearbeitungsstation (10) und eine davor angeordnete Profilkonturerkennungsstation (3) auf. Die Profilkonturerkennungsstation ist als Lichtschnitterkennungsstation (30) ausgebildet.

## Beschreibung

Die Erfindung betrifft eine Bearbeitungsmaschine für Tür- beziehungsweise Fensterrahmenprofile beziehungsweise für daraus gebildete Rahmen und Rahmenteile, welche eine Bearbeitungsstation und eine davor angeordnete Profilkonturerkennungsstation umfasst.

In modernen gattungsgemäßen Bearbeitungsmaschinen für die Herstellung von Tür- beziehungsweise Fensterrahmen beziehungsweise deren Rahmenteile werden oftmals die unterschiedlichsten Profiltypen bearbeitet. Mit einer Art der bekannten Bearbeitungsmaschinen werden aus Kunststoff, insbesondere aus PVC oder anderen thermoplastischen Kunststoffen bestehende Profilstäbe zu Tür- oder Fensterrahmen verschweißt. So unterscheiden sich bereits Fensterstockrahmen und Fensterflügelrahmen in ihrem Profilquerschnitt erheblich voneinander. Diese werden unter Umständen in kurzer Abfolge auf der gleichen Bearbeitungsmaschine verarbeitet. Dabei sind auch Profiltypen bekannt, die verhältnismäßig geringe Abweichungen untereinander aufweisen, die bei flüchtigem Hinsehen fast nicht auffallen.

Üblicherweise werden die Profilstäbe zunächst maßgenau abgelängt, also zersägt, gegebenenfalls dabei bereits auf Gehrung geschnitten, hernach an den Gehrungsflächen verschweißt und hernach im Gehrungsbereich in einem Verputzschritt derart bearbeitet, dass der Schweißwulst, der bei dem Verschweißen entsteht, abgetragen wird.

Es ist klar, dass das Verschweißen von nichtpassenden Profilen miteinander unmittelbar zum Ausschuss führt und mindestens der Teilrahmen, wenn nicht der gesamte Rahmen unbrauchbar ist.

Um solche Fehlbearbeitungen zu vermeiden, ist es bekannt, bei den gattungsgemäßen Bearbeitungsmaschinen vor der eigentlichen Bearbeitungsstation eine Profilkonturerkennungsstation vorzusehen.

Bekannte Profilkonturerkennungsstationen arbeiten mit mechanischen Tastern, die entsprechend der Profilkontur angeordnet sind und zum Beispiel die entsprechende Lage von Überschlägen, Einfalzungen, Absätzen, Nuten und so weiter entdecken. Die Auflösung dieser Art der Profilkonturerkennung ist letztendlich durch die Baugröße der eingesetzten mechanischen Taster beschränkt.

Bei der Verarbeitung von Profilen, die sich nur bezüglich einer Rundung unterscheiden, versagen die bekannten, mit Tastern ausgestatteten Profilkonturerkennungsstationen vollständig, da die Auswertung hierfür vollkommen ungenügend ist. Es besteht hiermit eine erhebliche Gefahr von Ausschussproduktion.

Aus dem Stand der Technik sind des Weiteren Vorrichtungen bekannt, die Langprodukte in Walzwerken, beispielsweise zum Erfassen der Geradheit, Dicke, Länge und Parallelität von Spezialprofilen, mit Hilfes eines längs des Langkörpers verfahrbaren Messkopfes erfassen. Eine derartige Vorrichtung ist nicht zum Erfassen der Kontur des Profilquerschnitts eines Fensterrahmen- oder Türrahmenprofils geeignet.

Des Weiteren ist es bekannt, die Oberfläche eines Körpers durch ein entsprechendes Verfahren zur Vermessung zu bestimmen. Hierzu sind zwei Lichtprojektoren und eine Kamera sowie eine Unterstützungseinrichtung notwendig.

Die vorliegende Erfindung hat es sich zur Aufgabe gemacht, eine Anordnung zu finden, mit der die Bearbeitung von Tür- beziehungsweise Fensterrahmenprofile beziehungsweise daraus gebildeten Rahmen oder Rahmenteile rationeller wird.

Zur Lösung dieser Aufgabe geht die Erfindung aus von einer Bearbeitungsmaschine wie eingangs beschrieben und schlägt vor, dass die Profilkonturerkennungsstation als Lichtschnitterkennungsstation ausgebildet ist. Die Lichtschnitterkennungsstation arbeitet nach dem Lichtschnitt. Der Lichtschnitt ist ein Verfahren der optischen 3D-Messtechnik, das die Vermessung eines Höhenprofils entlang einer projezierten Lichtlinie ermöglicht. Dies basiert auf dem Prinzip der Triangulation. Eine Lichtschnitterkennungsstation umfasst einen Lichtschnittsensor, der aus einem Linienprojektor, meist einem Laser als Lichtquelle besteht, der eine möglichst schmale und helle Linie auf das Messobjekt, hier das Profil, projeziert. Eine elektronische Kamera beobachtet die Projektionslinie auf dem Profil.

Das von der Kamera aufgenommene Bild wird unter anderem mit den Methoden der Photogrammetrie in 3D-Koordinaten oder andere Ergebnisse umgerechnet, die zu gut unterscheidbaren Eigenschaftsvektoren führen.

Der Einsatz des Lichtschnittes erlaubt es, auch zwei Profiltypen, die zum Beispiel sich nur in der Krümmung einer Wölbung unterscheiden, mit sehr hoher Sicherheit zu unterscheiden.

Durch die Erfindung wird eine Bearbeitungsmaschine zur Verfügung gestellt, die mit sehr viel höherer Genauigkeit die konkrete Profilkontur erkennt. Hieraus resultiert eine sehr viel bessere Bearbeitung und damit verbunden ein deutlich geringerer Ausschuss, wodurch eine rationellere Fertigung erreicht wird.

Es ergeben sich aber noch eine Vielzahl weiterer Vorteile durch die Erfindung. Mit den bekannten mechanischen Profilkonturerkennungsstationen ist es nur möglich, ortsdiskrete Messungen durchzuführen. Für jeden einzelnen Profilabschnitt ist daher ein eigener Sensor (Taster) vorzusehen, was teilweise zu sehr komplizierten Vorrichtungen führt. Dies wird durch den erfindungsgemäßen Aufbau vermieden. Die Flexibilität dieser Anordnungen im Stand der Technik ist gering.

Um eine möglichst eindeutige Profilidentifikation nach dem Stand der Technik zu erreichen, ist eine große Anzahl von mechanischen Sensoren einzusetzen. Die Hinzunahme neuer Profile in das Produktionspotfolio führt unter Umständen zu erheblichen Umbauten der mechanisch ausgebildeten Profilkonturerkennungsstation nach dem Stand der Technik. Dieser Aufwand wird nach der Erfindung vollständig vermieden. Der zuvor beschriebene Vorteil ergibt sich auch gegenüber den eingangs beschriebenen Lösungen des Standes der Technik, die bereits mit Lichtvermessung beziehungsweise mit Lichtschnittverfahren arbeiten. Allerdings sind die im Stand der Technik bekannten Verfahren zur Vermessung der Oberfläche von Körpern mit einem Lichtschnittverfahren durch einen äußerst komplizierten Aufbau gekennzeichnet. So werden gegenüber der vorliegenden Lösung wenigstens zwei Lichtprojektoren benötigt und eine Kamera. Des Weiteren muss eine Unterstützungseinrichtung vorgesehen sein, die das Erfassen der Oberfläche insgesamt unterstützt. Damit wird der Aufbau der gesamten Vorrichtung sehr aufwendig und sehr teuer. Für Bearbeitungsmaschinen im Kunststofffenster- beziehungsweise Türenbau sind die im Stand der Technik bekannten Lösungen so nicht zu verwenden, da auch der räumliche Aufwand zur Installation einer solchen Vorrichtung viel zu groß ist. Die aus dem Stand der Technik bekannten Lösungen, die die Dicke beziehungsweise Parallelität oder Geradheit oder Rauheit von Langkörpern messen, arbeiten mit einem längs des Langkörpers verfahrbaren Messkopf. Dies ist ein erheblicher Aufwand, der in einer Kunststoffbearbeitungsmaschine nicht betrieben werden kann. Die Lösung nach der Erfindung ermöglicht eine Profilidentifikation ohne eine solche aufwendige Lösung, wie sie aus dem Stand der Technik bekannt ist. Die Lösung nach der Erfindung läßt sich auch wesentlich besser an Profiländerungen anpassen und ist dadurch nicht einer ständigen Nachbesserung unterworfen.

Die nach der Erfindung vorgeschlagene Profilkonturerkennungsstation arbeitet berührungslos mit optischen Mitteln. Der sich mit der Zeit einstellende mechanische Verschleiß in den bekannten Profilkonturerkennungsstationen nach dem Stand der Technik wird vermieden.

Da es sich bei Kunststoffprofilen für Türen und Fenster um relativ schnelllebige Produkte handelt, unterliegen die Profiltypen einer hohen Änderungsgeschwindigkeit, die Profilkonturerkennungsstation bereitet die aufgenommenen Bilder entsprechend auf und vergleicht diese mit datentechnisch hinterlegten Vorlagen, diese Vorlagen können problemlos um neue Kunststoffprofiltypen erweitert werden.

Die Zuführung der Profile erfolgt oftmals auch nicht immer lagegleich, auch dies ist nach der Erfindung kein Problem, da diese durch den Lichtschnitt für die verschiedenen Lagen entsprechend eindeutig identifizierbar sind.

Des Weiteren ist durch die erfindungsgemäße Bearbeitungsmaschine auch eine kontinuierliche Konturenüberwachung des Profils möglich, das heißt, Profilstäbe durchlaufen die Profilkonturerkennungsstation nach der Erfindung und werden automatisch, berührungslos, ohne diese anzuhalten, von der Lichtschnitterkennungsstation abgetastet und auch überprüft. Mit der Erfindung ist im laufenden Betrieb auch eine Qualitätskontrolle der zu verarbeitenden Profilstäbe problemlos möglich.

In einer bevorzugten Ausgestaltung der Erfindung ist vorgesehen, dass die Bearbeitungsstation als Eingangskontrollstation, Prüfstation, Profillagekontrollstation, Sortierstation, Lager, Sägestation, Schweißstation oder Verputzstation ausgebildet ist. Die der Profilkonturerkennungsstation nachgeschaltete Bearbeitungsstation ist erfindungsgemäß sehr variabel ausgestaltet. Als Bearbeitungsstation im Sinne der Erfindung ist nicht nur auf eine tatsächliche Bearbeitung, also eine Materialveränderung, abzustellen, sondern bereits jede Art der Bearbeitung beziehungsweise der Behandlung, insbesondere eine Lagerung oder eine sonstige Überprüfung gehören ebenfalls zum möglichen Funktionsumfang einer Bearbeitungsstation.

In dem Anwendungsfall der Bearbeitungsstation als Eingangskontrollstation wird zum Beispiel ein nicht den Qualitätsnormen (zum Beispiel Toleranzbereichen) entsprechender Profilstab aus dem Strom der eingeförderten Profilstäbe ausgesondert.

Gegebenenfalls wirkt die erfindungsgemäß vorgesehene Lichtschnitterkennungsstation mit einer Prüfstation für das Profil beziehungsweise den daraus gebildeten Rahmen oder das daraus gebildete Rahmenteil zusammen. Eine entsprechende Prüfung (zum Beispiel der Stabilität) wird aufgrund des von der Profilkonturerkennungsstation nach der Erfindung ermittelten Profilklasse durchgeführt.

Entscheidend für die weitere Verarbeitung eines Profiles ist, wie dieses Profil in die Bearbeitungsmaschine eingelegt worden ist. Das Arbeitsergebnis ist negativ, wenn das Profil nicht in seiner bezüglich der Längsachse richtigen Winkellage weiterverarbeitet, zum Beispiel verschweißt wird.

Durch die erfindungsgemäße Anordnung ist es möglich, auch die Lage des Profiles, also seine Winkellage bezüglich der Längsachse zu detektieren und auszuwerten.

Dabei kann die in dieser Variante der Erfindung vorgesehene Profillagekontrollstation auch eine Profilwende- oder -drehvorrichtung aufweisen, um ein falsch eingelegtes Profil in die richtige Lage zu drehen und dann der weiteren Bearbeitung zuzuführen.

Die einzeln eingeförderten Profile unterscheiden sich natürlich aufgrund ihrer Kontur, aber gegebenenfalls auch aufgrund ihrer Länge oder bereits erfolgten Bearbeitungen (zum Beispiel Zuschnitt). Unter Umständen sind die Profile dann zu sortieren, was in einer der Lichtschnitterkennungsstation nachgeschalteten Sortierstation erfolgt.

Auch die Kombination der erfindungsgemäß vorgeschlagenen Lichtschnitterkennungsstation mit einem Lager als Lagerstation ist günstig, da damit eine genaue Kontrolle über die verschiedenen Profilkonturen im Lager automatisch möglich ist.

Die vorgenannten Typen von Bearbeitungsstationen betreffen, wie bereits ausgeführt, nicht unmittelbar eine Veränderung des Profilstabes, sondern eher seine Verwaltung. Klassischerweise umfassen die Bearbeitungsstationen aber auch eine Sägestation, eine Schweißstation oder eine Verputzstation, wie sie bei der Herstellung von Fenster- oder Türrahmen aus entsprechenden Rahmenprofilen üblich sind.

In einer Sägestation werden dabei die angelieferten Profilstäbe aus Maß und Gehrung abgelängt, in einer Schweißstation werden die Profilstäbe lagerichtig winkelig miteinader verschweißt und in der Verputzstation werden die bei dem Verschweißvorgang erzeugten Schweißraupen entfernt.

In einer bevorzugten Ausgestaltung der Erfindung ist vorgesehen, dass die Lichtschnitterkennungsstation eine eine Lichtlinie erzeugende Lichtquelle, bevorzugt einen Laser und eine Kamera umfasst, welche das Projektionsbild der Lichtlinie auf dem Profil beobachtet.

Als Kamera wird geschickterweise eine elektronische Kamera eingesetzt. Sie dient zur Gewinnung von digitalen Bildinformationen. Hierfür haben sich zwei unterschiedliche Sensortypen etabliert, nämlich CMOS und CCD.

Beide Kameratypen weisen unterschiedliche Besonderheiten auf. So ist ein CMOS-Sensor oder -Kamera stromverbrauchsarm, weist keinen Bloomingeffekt auf, bietet eine höhere Aufnahmegeschwindigkeit und ist im Anschaffungspreis günstiger.

Hingegen zeichnet sich eine CCD-Kamera beziehungsweise -Sensor durch ein niedrigeres Rauschen, höhere Pixelgleichheit, bessere Lichtempfindlichkeit und höhere Auflösung aus.

Grundsätzlich sind beide Sensor- beziehungsweise Kameratypen erfindungsgemäß verwendbar.

In einer weiteren erfindungsgemäßen Variante ist vorgesehen, dass der Kamera nachgeordnet eine Bildaufbereitungseinheit vorgesehen ist. Diese erzeugt aus dem Projektionsbild, das von der Kamera aufgenommen worden ist, einen Merkmalsvektor des beobachteten Profiles.

Unter einem Merkmalsvektor wird ein Vektor verstanden, der als Koeffizient einzelne Merkmale des beobachteten Objektes enthält. Dabei ist ein Merkmal ein einzelner Wert, der einen Aspekt des beobachteten Objektes beschreibt, zum Beispiel die Größenangabe oder die Helligkeit eines Punktes in einem Rasterbild und so weiter.

Mit diesen der linearen Algebra entlehnten Begriffen ist es möglich, durch den Lichtschnitt erhaltene Informationen, die verhältnismäßig komplex sind, in einfacher Weise miteinander zu vergleichen. So beschreibt ein Merkmalsraum einen durch die Merkmalsvektoren aufgespannten Raum. Wird eine Objektklasse durch die Merkmale gut definiert, sollten alle Merkmalsvektoren dieser Klasse im Merkmalsraum nahe beieinander liegen. Durch ein solches Kriterium ist es möglich, entsprechende Klassifizierungen eines zu überprüfenden Profiles durchzuführen. Es ist klar, dass die Auswahl der einzelnen Werte, also der einzelnen Merkmale, die Koeffizienten des Merkmalsvektors sind, sehr variabel ist.

Dabei ist die erfindungsgemäß vorgeschlagene Bildaufbereitungseinheit nicht nur auf das Auswerten eines einzelnen Bildes des Projektionsbildes beschränkt. Es ist auch möglich, wenn zum Beispiel die Lage der Kamera oder der Lichtquelle verändert wird (wie das noch später geschildert wird), auch eine Reihe von Projektionsbildern, korreliert mit der jeweiligen Position des veränderlichen Parameters, zu verarbeiten und so schneller Rückschlüsse auf das vorliegende Profil ziehen zu können.

In einer weiteren bevorzugten Variante der Erfindung ist vorgesehen, dass die Lichtschnitterkennungsstation einen Speicher mit Merkmalsvektoren von in Profilklassen klassifizierten Profilen umfasst. Unter Umständen ist den jeweiligen Profilklassen nicht nur ein singulärer Merkmalsvektor zugeordnet, sondern die Profilklasse wird durch eine Mehrzahl von Merkmalsvektoren, einen Merkmalsraum, wie oben angedeutet, beschrieben. Es ergibt sich so eine gewisse Bandbreite, also ein Toleranzbereich, in dem ein zu prüfendes Profil einer Profilklasse zuzuschlagen ist. Dies kann entweder mit einer tatsächlichen Intervallangabe in den einzelnen Koeffizienten des Merkmalsvektors erfolgen, oder aber durch die Definition eines von mehreren Merkmalsvektoren bestimmten Merkmalraumes.

Der große Vorteil der Anordnung eines Speichers, der insbesondere als Datenspeicher ausgeführt ist, ist seine problemlose Anpassung an neue Profilklassen. So werden zum Beispiel entsprechende Lichtschnittbilder, also Projektionsbilder gegebenenfalls simuliert im Speicher zur Verfügung gestellt und so die gesamte erfindungsgemäße Bearbeitungsmaschine, ohne sonstige bauliche Änderungen vorzunehmen, bezüglich der Profilerkennung auf einen neuen Profiltyp ausgeweitet.

Neben einer Simulation zur Gewinnung der Merkmalsvektoren einer neuen Profilklasse, ist natürlich auch die Vermessung eines Prototypen für Vergleichszwecke ein Weg, diese Informationen zu gewinnen.

Des Weiteren umfasst die Erfindung in der Lichtschnitterkennungsstation eine Vergleichseinheit, in welcher der Merkmalsvektor des beobachteten Profiles verglichen wird mit dem Merkmalsvektor beziehungsweise Merkmalsraum der klassifizierten Profile, die im Speicher abgelegt sind. In dieser Vergleichseinheit wird tatsächlich der Merkmalsvektor des beobachteten Profiles auf die in Profilklassen klassifizierten Profile zugeordnet. Bei einer hinreichend hohen Übereinstimmung des Merkmalsvektors des beobachteten Profiles mit dem Merkmalsvektor beziehungsweise Merkmalsraumes eine klassifizierten Profiles, wird dann das beobachtete Profil dieser Profilklasse zugeordnet. Das bedeutet, dass dieses Profil klassifiziert worden ist, wobei bei einer entsprechenden Güte des Merkmalraumes beziehungsweise der zur Charakterisierung eingesetzten Merkmalvektoren auch eine eindeutige Zuordnung, das heißt Klassifizierung erfolgt.

Geschickterweise ist dabei in der datentechnisch hinterlegten Profilklasse nicht nur der zugehörige Merkmalsvektor beziehungsweise Merkmalsraum hinterlegt, sondern es sind auch für die jeweilige Profilklasse Bearbeitungsinformationen bekannt, die dann dem beobachtetem, klassifiziertem Profil datentechnisch zugeordnet werden. Zum Beispiel trägt jeder Profilstab eine eindeutige Markierung, zum Beispiel eine Barcode. Dieser Barcode kann von einem Barcode-Lesegerät ausgelesen werden und individualisiert damit jeden einzelnen Profilstab. In der erfindungsgemäß ausgeführten Lichtschnitterkennungsstation wird der Profiltyp, wie beschrieben, ermittelt und diese Information mit der eindeutigen Profilstabnummer datentechnisch verknüpft. In der danach folgenden Bearbeitungsstation wird wiederum diese Barcodeinformation, also die Profilstabsnummer detektiert, die Profilklasse ausgelesen und hieraus die notwendigen Bearbeitungsinformationen verwertet. Eine solche Bearbeitungsinformation ist zum Beispiel die Information, dass es sich um einen speziellen Profiltyp handelt, der aber um 180° zu wenden ist. Eine andere Bearbeitungsinformation ist zum Beispiel jene, dass es sich um einen speziellen anderen Profiltyp handelt, der aber verhältismäßig große Maßtoleranzen aufweist, weshalb aus solchen Profilstäben nur Rahmen minderer Stabilität zu produzieren sind. Es ist klar, dass hierzu eine Vielzahl unterschiedlichster Bearbeitungsinformationen einsetzbar sind.

Des Weiteren umfasst die Erfindung nicht nur die Bearbeitungsmaschine, wie eingangs beschrieben, sondern erstreckt sich in gleicher Weise auch auf ein Verfahren für die Bestimmung der Profilkontur von Tür- beziehungsweise Fensterrahmenprofilen beziehungsweise daraus gebildeten Rahmen beziehungsweise Rahmenteile durch Verwendung des Lichtschnittverfahrens. Der Einsatz des Lichtschnittverfahrens, wie es eingangs beschrieben worden ist, gerade für die Bestimmung der Profilkontur von Türbeziehungsweise Fensterrahmenprofilen, bildet in diesem Bereich einen erheblichen Vorteil und löst die eingangs gestellte Aufgabe optimal. Als Lichtschnittverfahren wird dabei natürlich das Verfahren nach dem Lichtschnitt verstanden.

In einer bevorzugten Ausgestaltung des erfindungsgemäßen Verfahrens wird dabei vorgesehen, dass eine Kamera ein von einer Lichtquelle auf dem Profil erzeugtes Projektionsbild einer Lichtlinie beobachtet und das von der Kamera beobachtete und aufgenommene Projektionsbild in einer Bildaufbereitungseinheit ausgewertet wird.

Die Profilkontur führt in unterschiedlichen Höhenlagen zu einzelnen Flächenbereichen der Mantelfläche des Profiles. Dieses hieraus resultierende Höhenprofil ist durch den Lichtschnitt entsprechend vermessbar und wird als Projektionsbild einer hierauf projezierten Lichtlinie von der Kamera aufgenommen. Das hieraus resultierende Projektionsbild der elektronischen Kamera wird in einer Bildbearbeitungseinheit, wie oben beschrieben, weiter ausgewertet.

In diesem Zusammenhang wird insbesondere darauf hingewiesen, dass alle im Bezug auf die Bearbeitungsmaschine beschriebenen Merkmale und Eigenschaften aber auch Verfahrensweisen sinngemäß auch bezüglich der Formulierung des erfindungsgemäßen Verfahrens übertragbar und im Sinne der Erfindung einsetzbar und als mitoffenbart gelten. Gleiches gilt auch in umgekehrter Richtung, das bedeutet, nur in Bezug auf das Verfahren genannte bauliche, also vorrichtungsgemäße Merkmale können auch im Rahmen der Ansprüche der Bearbeitungsmaschine berücksichtigt und beansprucht werden und zählen ebenfalls zur Erfindung und zur Offenbarung. Hierbei sei insbesondere darauf hingewiesen, dass für die Übertragbarkeit der Merkmale aus der Bearbeitungsmaschine auf die Verfahrensansprüche die Erfindung in dem erfindungsgemäßen Verfahren nicht die Anordnung einer Bearbeitungsstation voraussetzt. Gleichwohl umfaßt das Verfahren natürlich auch Anordnungen, bei welcher der Bestimmung der Profilkontur nachfolgend eine Bearbeitungsstation vorgesehen ist, in der die unterschiedlichen aufgeführten Bearbeitungsschritte (Eingangskontrolle, Prüfung, Profillagekontrolle, Sortierung, Lagerung, Sägen, Schweißen, Verputzen) durchgeführt werden.

In der Zeichnung ist die Erfindung schematisch dargestellt. Es zeigen:
- Fig. 1: in einer schematischen Übersicht die erfindungsgemäße Bearbeitungs-maschine;
- Fig. 2: eine Ansicht der Profilkonturer-kennungsstation nach der Erfindung und
- Fig. 3: in einer schematischen Übersicht den Ablauf der Profilkonturerkennung nach der Erfindung.

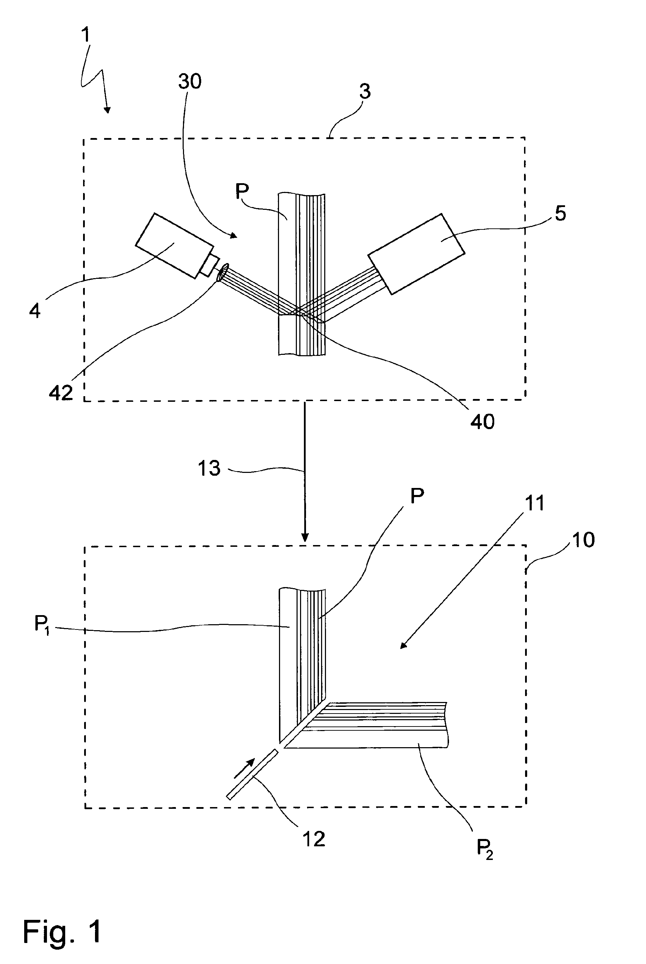

In Fig. 1 ist die erfindungsgemäße Bearbeitungsmaschine in einer schematischen Übersicht dargestellt. Erfindungsgemäß besteht die Bearbeitungsmaschine 1 aus nur zwei Stationen, nämlich zunächst einer Profilkonturerkennungsstation 3 und einer nachfolgend angeordneten Bearbeitungsstation 10. Mit dem Pfeil 13 ist die Förderrichtung des Profiles P beziehungsweise die Abfolge der Bearbeitung angedeutet. Die Bearbeitungsstation 10 ist der Profilkonturerkennungsstation 3 nachgeordnet.

Erfindungsgemäß ist die Profilkonturerkennungsstation 3 als Lichtschnitterkennungsstation 30 ausgeführt. Hierzu ist in der Lichtschnitterkennungsstation 30 eine Lichtquelle 4 vorgesehen, die mit geeigneter Optik 42 ausgestattet ist, um auf der Oberfläche des Profiles P eine Lichtlinie 40 abzubilden.

Günstigerweise ist die Lichtquelle 4 hierbei als Laser realisiert, die Optik 42 besteht aus einer entsprechenden Aufspreizoptik. Dabei ist zu beachten, dass bei dem Lichtschnittverfahren die Qualität der projezierten Laserlinie ein wichtiges Kriterium für die zuverlässige Auswertung der Bildaufnahmen ist. Die Optik besteht daher aus einem entsprechenden Liniengenerator, der aus dem Laserstrahl eine Lichtebene 41 erzeugt, die auf dem Profil P die Lichtlinie 40 abbildet. Die Qualität der Lichtlinie 40 kann durch folgende Kenngrößen beschrieben werden: Schärfentiefe, Linienbreite und Strahlidentitätsverteilung.

Die auf dem Profil P abgebildete Lichtlinie 40 wird in der Kamera 5 als Projektionsbild 50 aufgenommen.

Ein wesentlicher Vorzug der Erfindung liegt darin, dass die Profilkonturerkennung mit der erfindungsgemäß vorgeschlagenen Lichtschnitterkennungsstation sogar bei sich bewegendem Profil P erfolgt. Damit kann auch die Konturgenauigkeit in Längsrichtung mit der erfindungsgemäßen Anordnung überprüft werden. Außerdem wird die genannte Bearbeitungszeit reduziert, da keine Stillstandszeiten für die Profilkonturerkennung mehr notwendig sind.

In Fig. 1 ist im unteren Bereich eine beispielhafte Bearbeitungsstation 10 vorgesehen. Es handelt sich hierbei um eine Schweißstation 11, die zum Verschweißen zweier rechtwinklig zueinander zu verschweißender Profile P₁ und P₂ dient. Hierzu sind die beiden Profile P₁, P₂ bereits auf Gehrung (45°) geschnitten und winkelig zueinander angeordnet.

Es wird ein Schweißspiegel 12 zwischen die Gehrungsflächen geschoben, um diese, sie bestehen aus thermoplastischem Kunststoff, ausreichend (über 180°C) zu erwärmen. Der Schweißspiegel 12 wird hernach zurückgezogen und die beiden Profile werden zusammengeführt und verschweißt.

Es ist klar, dass dieses Ausführungsbeispiel einer Bearbeitungsstation durch beliebige andere Bearbeitungen, wie in dieser Anmeldung beschrieben, ersetzbar ist.

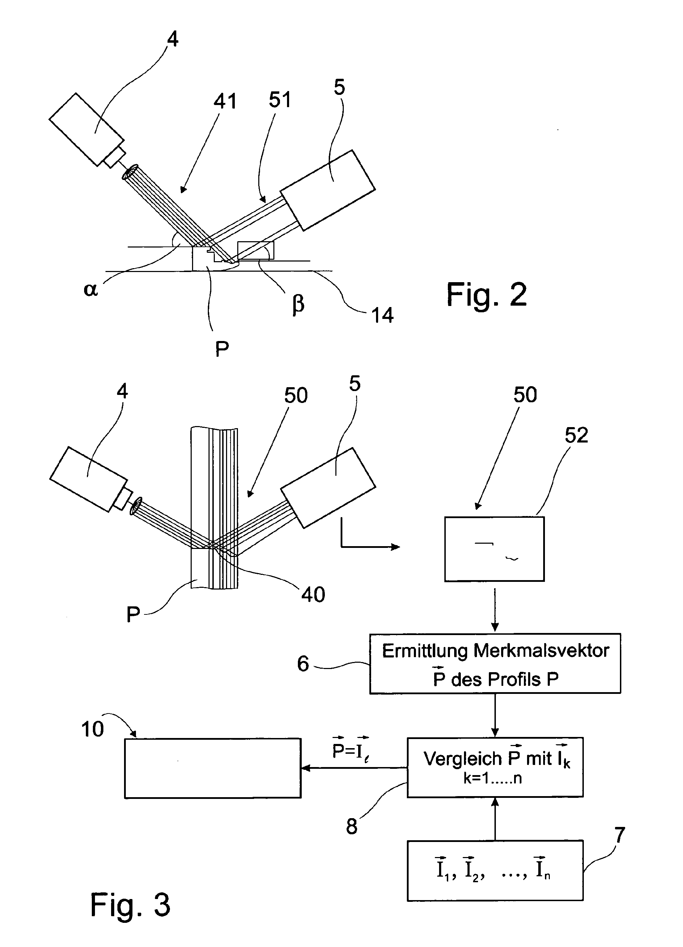

In Fig. 2 ist eine Seitenansicht, in Blickrichtung der Längserstreckung des Profiles P gezeigt.

Beachtenswert dabei ist, dass die von der Lichtquelle 4 erzeugte, auf dem Profil P eine Lichtlinie 40 ergebende Lichtebene 41 und die sich zwischen Projektionsbild und Kamera 5 ergebende Projektionsebene 51 jeweils Teil einer gemeinsamen (planaren) Ebene sind. Als Projektionsbild wird hierbei das von der Kamera aufgenommene Bild der Lichtlinie verstanden.

Diese Anordnung erleichtert erheblich die optische Auswertung der Ergebnisse.

In dem in Fig. 2 dargestellten Bild liegt das Profil P auf einer Auflageebene 14 auf. Dies kann zum Beispiel ein Bearbeitungstisch, ein Förderband und so weiter sein.

Sowohl die Lichtquelle 4 wie auch die Kamera 5 befinden sich schräg oberhalb (links die Lichtquelle 4 und rechts die Kamera 5) des Profiles P, über der Auflageebene 14. Eine Verbindungslinie der Lichtquelle 4 mit dem Profil P, welches auf der Auflageebene 14 liegt, definiert einen Lichtquellenhöhenwinkel α. In gleicher Weise definiert eine Verbindungslinie der Kamera 5 mit dem Profil einen Kamerahöhenwinkel β.

Die den Winkel α beziehungsweise β begrenzenden parallelen Linien sind natürlich parallel zur Auflageebene 14.

Insbesondere aus der Darstellung nach Fig. 2 wird klar, dass sich das von der Kamera 5 aufgenommene Projektionsbild signifikant verändert, wenn sich die Lage der Lichtquelle 4, zum Beispiel deren Lichtquellenhöhenwinkel α erheblich verändert. Es liegen nämlich in der jetzt dargestellten Situation gewisse Mantelflächenbereiche des Profiles P im Schatten und zeigen kein Abbild. Übersteigt aber der Lichtquellenhöhenwinkel α zum Beispiel 90°, so werden die Bereiche, die zunächst abgeschattet sind, ebenfalls von der Laserlinie erfasst und erzeugen ein entsprechendes Projektionsbild in der Kamera 5. Geschickterweise ist es dabei möglich, das Profil P in einem Halbkreis (180°) oder einem vollständigen Kreis (360°) von der Lichtquelle 4 umfahren zu lassen. Das bedeutet, dass der Lichtquellenhöhenwinkel α einen vollen Kreis beschreibt. Dabei ist es kein Widerspruch, wenn der Lichtquellenhöhenwinkel α über 180° ansteigt und dann die Lichtquelle 4 (theoretisch) unterhalb des Profils P liegt.

Mit einem solchen 360°-Scan ist es möglich, alle Seiten des Profiles P mit dem Lichtschnitt zu erfassen und so eindeutig festzulegen, in welcher Lage das Profil P auf der Auflageebene 14 aufliegt. Somit können Falschorientierungen in einer nachgeordneten Berarbeitungsstation berücksichtigt und gegebenenfalls ausgeglichen werden.

In gleicher Weise ist zwischen der Verbindungslinie der Kamera 5 mit dem Profil P und der Auflageebene 14 des Profils ein Kamerahöhenwinkel β vorgesehen. Auch der Kamerahöhenwinkel β ist in einer erfindungsgemäßen Variante variabel, das heißt, er verändert sich während der Aufnahme von Projektionsbildern.

Geschickterweise werden die aufgenommenen Projektionsbilder entweder einerseits mit dem Kamerahöhenwinkel β oder aber mit dem Lichtquellenhöhenwinkel α korreliert, das bedeutet, die Kamera nimmt eine Sequenz von sich verändernden Projektionsbildern, entsprechend der jeweiligen Winkellage des Lichtquellenhöhenwinkels α oder Kamerahöhenwinkels β, auf. Zum Beispiel sind Lichtquelle 4 und/oder Kamera 5 auf einer (kreis- )runden Führungsbahn angeordnet, durch welche im Mittelpunkt das Profil P hindurchgefördert wird. Gemäß der Erfindung ist es dabei auch möglich, die Verschwenkbewegung der Lichtquelle 4 und/oder der Kamera 5 auf der Umfangs- oder Kreisbahn mit der Förderbewegung des Profiles P in dessen Längsrichtung zu überlagern.

In Fig. 3 ist der Ablauf in der Profilkonturerkennungsstation 3, insbesondere der Lichtschnitterkennungsstation 30 schematisch dargestellt.

Oben links in Fig. 3 ist die Aufnahmesituation des Lichtschnittes schematisch dargestellt, wobei zur besseren Übersichtlichkeit die Lichtquelle 4 und die Kamera 5 sowie deren Lichtebene 41 und Projektionsebene 51 gegen die vertikale Sichtrichtung verkippt ist, was aber nicht zwingend so zu realisierten ist, diese Darstellung ist der besseren Übersichtlichkeit wegen gewählt.

In der Kamera 5 wird ein Projektionsbild 50 aufgenommen, wie es in dem Bildschirmausschnitt 52 schematisch angedeutet ist.

Der Kamera 5 nachgeordnet ist eine Bildbearbeitungseinheit 6.

Mit Hilfe dieser Bildbearbeitungseinheit 6, in welcher ein entsprechender datentechnischer Algorithmus abläuft, wird aus dem von der Kamera 5 aufgenommenen Projektionsbild 50 ein Merkmalsvektor P̅ des Profils P erzeugt. Dieser Merkmalsvektor ordnet eine Vielzahl von unterschiedlichen Merkmalen des Projektionsbildes 50 an, die Merkmale sind entsprechend den auszuwertenden Eigenschaften gewählt. Mit Hilfe des Merkmalsvektors P̅ wird das Profil P möglichst exakt beschrieben. Diese gewonnene Eigenschafts- oder Identitätsinformation des Profiles P wird dann an eine Vergleichseinheit 8 weitergegeben.

Des Weiteren umfassen die Profilkonturerkennungsstation 3 beziehungsweise die Lichtschnitterkennungsstation 30 auch einen Speicher 7. In diesem Speicher 7 ist eine Mehrzahl von Merkmalsvektoren I̅₁,I̅₂, ...,I̅ₙ beziehungsweise Merkmalsräumen von in Profilklassen klassifizierten Profilen P₁ hinterlegt. Der Speicher 7 umfasst also eine Sammlung der datentechnisch auswertbaren und verwertbaren Informationen insbesondere der Kontur oder des Höhenprofiles von unterschiedlichsten Fenster-und Türrahmenprofilen.

In der Vergleichseinheit 8 wird nun der Merkmalsvektor P̅ des zu überwachenden oder zu kontrollierenden Profiles P mit mit allen Merkmalsvektoren I̅₁,I̅₂, ...,I̅ₙ beziehungsweise Merkmalsräumen der im Speicher 7 hinterlegten, in Profilklassen P₁ klassifizierten Profilen verglichen.

Wird eine hinreichend hohe Übereinstimmung des Merkmalsvektors des beobachteten Profiles P mit dem Merkmalsvektor beziehungsweise Merkmalsraum eines klassifizierten Profiles festgestellt, so hat der Klassifizierungsprozess ein Ergebnis (P = I₁, mit 1 zwischen 1 und n), nämlich dass das Profil P der Profilklasse I₁ zuzuordnen ist. Diese Information, also die Zuordnung des Profiles P in eine spezielle Profilklasse I₁ wird gegebenenfalls mit weiteren Bearbeitungsinformationen der Bearbeitungsstation 10 zugeleitet. Die Bearbeitungsstation 10 berücksichtigt diese Bearbeitungsinformationen entsprechend.

Die jetzt mit der Anmeldung und später eingereichten Ansprüche sind Versuche zur Formulierung ohne Präjudiz für die Erzielung weitergehenden Schutzes.

Sollte sich hier bei näherer Prüfung, insbesondere auch des einschlägigen Standes der Technik, ergeben, daß das eine oder andere Merkmal für das Ziel der Erfindung zwar günstig, nicht aber entscheidend wichtig ist, so wird selbstverständlich schon jetzt eine Formulierung angestrebt, die ein solches Merkmal, insbesondere im Hauptanspruch, nicht mehr aufweist.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die bislang nur in der Beschreibung offenbart wurden, können im Laufe des Verfahrens als von erfindungswesentlicher Bedeutung, zum Beispiel zur Abgrenzung vom Stand der Technik beansprucht werden.

Merkmale, die nur in der Beschreibung offenbart wurden, oder auch Einzelmerkmale aus Ansprüchen, die eine Mehrzahl von Merkmalen umfassen, können jederzeit zur Abgrenzung vom Stande der Technik in den ersten Anspruch übernommen werden, und zwar auch dann, wenn solche Merkmale im Zusammenhang mit anderen Merkmalen erwähnt wurden beziehungsweise im Zusammenhang mit anderen Merkmalen besonders günstige Ergebnisse erreichen.

## Patentansprüche

1. Bearbeitungsmaschine für Tür- beziehungsweise Fensterrahmenprofile beziehungsweise daraus gebildete Rahmen oder Rahmenteile, welche eine Bearbeitungsstation und eine davor angeordnete Profilkonturerkennungsstation umfasst, **dadurch gekennzeichnet, dass** die Profilkonturerkennungsstation (3) als Lichtschnitterkennungsstation (30) ausgebildet ist.

2. Bearbeitungsmaschine nach Anspruch 1, **dadurch gekennzeichnet, dass** die Bearbeitungsstation (10) als Eingangskontrollstation, Prüfstation, Profillagekontrollstation, Sortierstation, Lager, Sägestation, Schweißstation oder Verputzstation ausgebildet ist.

3. Bearbeitungsmaschine nach einem oder beiden der vorhergehenden Ansprüche, **dadurch gekennzeichnet, dass** die Lichtschnitterkennungsstation (30) eine eine Lichtlinie (40) erzeugende Lichtquelle (4), bevorzugt einen Laser, und eine Kamera (5) umfasst, welche das Projektionsbild (50) der Lichtlinie (40) auf dem Profil (P) beobachtet.

4. Bearbeitungsmaschine nach einem oder mehreren der vorhergehenden Ansprüche, **dadurch gekennzeichnet, dass** die von der Lichtquelle (4) erzeugte, auf dem Profil (P) eine Lichtlinie (40) ergebende Lichtebene (41) und die sich zwischen Projektionsbild (50) und Kamera (5) ergebende Projektionsebene (51), jeweils Teile einer gemeinsamen Ebene sind.

5. Bearbeitungsmaschine nach einem oder mehreren der vorhergehenden Ansprüche, **dadurch gekennzeichnet, dass** die Verbindungslinie der Lichtquelle (4) mit dem Profil (P) mit der Auflageebene (14) des Profiles (P) einen Lichtquellenhöhenwinkel (α) einschließt, und die Lage der Lichtquelle (4) während der Beobachtung des Projektionsbildes (50) derart veränderbar ist, dass sich der Lichtquellenhöhenwinkel (α) verändert und die Kamera (5) eine Vielzahl von einzelnen, mit dem jeweiligen Lichtquellenhöhenwinkel (α) korrelierten Projektionsbildern (50) aufnimmt.

6. Bearbeitungsmaschine nach einem oder mehreren der vorhergehenden Ansprüche, **dadurch gekennzeichnet, dass** die Verbindungslinie der Kamera (5) mit dem Profil (P) mit der Auflageebene (14) des Profils (P) einen Kamerahöhenwinkel (β) einschließt und die Lage der Kamera (5) während der Beobachtung des Projektionsbildes (50) derart veränderbar ist, dass sich der Kamerahöhenwinkel (β) verändert und die Kamera (5) eine Vielzahl von einzelnen, mit dem jeweiligen Kamerahöhenwinkel (β) korrelierten Projektionsbildern (50) aufnimmt.

7. Bearbeitungsmaschine nach einem oder mehreren der vorhergehenden Ansprüche, **dadurch gekennzeichnet, dass** der Kamera (5) nachgeordnet eine Bildaufbereitungseinheit (6) vorgesehen ist, die aus dem Projektionsbild (50) einen Merkmalsvektor (P̅) des beobachteten Profiles erzeugt.

8. Bearbeitungsmaschine nach einem oder mehreren der vorhergehenden Ansprüche, **dadurch gekennzeichnet, dass** die Lichtschnitterkennungsstation (30) einen Speicher (7) mit Merkmalsvektoren (I̅₁,I̅₂, ...,I̅ₙ ) beziehungsweise Merkmalsraum von in Profilklassen klassifizierten Profilen umfasst.

9. Bearbeitungsmaschine nach einem oder mehreren der vorhergehenden Ansprüche, **dadurch gekennzeichnet, dass** die Lichtschnitterkennungsstation (30) eine Vergleichseinheit (8) umfasst, in welcher der Merkmalsvektor (P̅) des beobachteten Profiles (P) verglichen wird mit dem Merkmalsvektor (I̅₁,I̅₂, ...,I̅ₙ ) beziehungsweise Merkmalsraum der klassifizierten Profile des Speichers.

10. Bearbeitungsmaschine nach einem oder mehreren der vorhergehenden Ansprüche, **dadurch gekennzeichnet, dass** bei einer hinreichend hohen Übereinstimmung des Merkmalvektors (P̅) des beobachteten Profiles (P) mit dem Merkmalsvektor beziehungsweise Merkmalsraum eines klassifizierten Profiles (I̅₁) das beobachtete Profil (P) dieser Profilklasse zugeordnet wird.

11. Bearbeitungsmaschine nach einem oder mehreren der vorhergehenden Ansprüche, **dadurch gekennzeichnet, dass** der jeweiligen Profilklasse (I̅₁) Bearbeitungsinformationen, insbesondere für die nachfolgende Bearbeitungsstation (10) zugeordnet sind und diese Bearbeitungsinformationen dem beobachteten, klassifizierten Profil (P) datentechnisch zugeordnet werden.

12. Verfahren für die Bestimmung der Profilkontur von Türbeziehungsweise Fensterrahmenprofilen beziehungsweise daraus gebildete Rahmen beziehungsweise Rahmenteile, durch Verwendung des Lichtschnittverfahrens.

13. Verfahren nach Anspruch 12, **dadurch gekennzeichnet, dass** eine Kamera ein von einer Lichtquelle auf dem Profil erzeugtes Projektionsbild einer Lichtlinie beobachtet und das von der Kamera beobachtete und aufgenommene Projektionsbild in einer Bildaufbereitungseinheit ausgewertet wird.
